# EUROPÄISCHE PATENTSCHRIFT

(11) **EP 0 264 690 B1**
(45) Veröffentlichungstag und Bekanntmachung des Hinweises auf die Patenterteilung: **13.01.1993**
(21) Anmeldenummer: 87114401.0
(22) Anmeldetag: 02.10.1987
(51) Int. Cl.: B03D 1/14, B01D 19/02

(54) **Verfahren und Vorrichtung zur Entschäumung**
Defoaming method and apparatus therefor
Procédé et appareil d'écumage

(30) Priorität: 21.10.1986 DE 3635713
(43) Veröffentlichungstag der Anmeldung: 27.04.1988
(73) Patentinhaber: J.M. Voith GmbH, D-89522 Heidenheim (DE)
(72) Erfinder: Schweiss, Peter, D-7907 Langenau (DE); Dörflinger, Hans-Dieter, D-7920 Heidenheim (DE)

(56) Entgegenhaltungen:
- DE-C- 687 966
- FR-A- 1 084 313
- US-A- 2 765 867

## Beschreibung

Die Erfindung betrifft ein Verfahren zur Entschäumung entsprechend dem Oberbegriff des Patentanspruchs 1 sowie zweckmäßige Einrichtungen dafür.

Es besteht die Schwierigkeit, den im allgemeinen in einer Schaumrinne in der Primär-Flotationszellenanordnung gesammelten Schaum konstant einer Pumpe zuzuführen, die diese Flüssigkeitsmenge (Schaum) den Sekundär-Flotationsstufen zuführt. Wegen des sehr großen Luftanteils könnte eine starke Überdimensionierung der Pumpe in Frage kommen, jedoch ist dies relativ aufwendig und für die hin und wieder auftretenden Betriebsfälle, daß in jener Flüssigkeitsmenge ein nur geringer Gasanteil vorhanden ist, könnte die Regelung sehr leicht aus dem Gleichgewicht geraten, weil die Pumpe dann zu viel Flüssigkeit fördern wurde.

Bekanntlich wird ja die in der Sekundär-Flotationsstufe gereinigte Flüssigkeit wieder der Primär-Flotationsstufe zugeführt. Hieran greift die Erfindung ein und löst das Problem, einen einwandfreien Pumpenbetrieb ohne Überdimensionierung der Pumpe zu ermöglichen.

Diese Aufgabe wird erfindungsgemäß durch die kennzeichnenden Merkmale des Patentanspruchs 1 gelöst.

Es ist durch FR 1 084 313 eine Entgasungseinrichtung bekannt, bei der durch eine in den Zyklon tangential eingeleitete Gasströmung die zugeführte, einen starken Schaumanteil enthaltene Zweiphasenströmung in Rotation versetzt wird, um den Gasbestandteil abzutrennen. Diese Einrichtung ist wohl nur geeignet für spezielle Anwendungsfälle, bei der durch eine Rohrleitung zuführbares Flüssigkeits-Gas-Gemisch vorhanden ist. Andererseits scheint mit einer sehr hohen Geschwindigkeit der induzierenden Gasströmung gearbeitet zu werden. Diese Anordnung ist nicht geeignet, unmittelbar an eine Schaumrinne einer Flotationseinrichtung angeschlossen zu werden.

Eine ähnliche Einrichtung ist bekannt aus US 27 65 867, wobei hier jedoch der Zyklon praktisch aus zwei übereinander angeordneten, koaxialen Zyklonen besteht, die durch ein zentrales Gasdurchgangsrohr strömungsmäßig miteinander in Verbindung stehen. Der untere Zyklon, der im wesentlichen zur Entgasung dient, ist ebenso aufgebaut wie der nach Figur 4 der eben diskutierten Veröffentlichung. Auch diese Einrichtung ist nicht geeignet, um direkt an eine Schaumrinne einer Flotationseinrichtung angeschlossen zu werden.

Eine günstige Einrichtung zur Durchführung des Verfahrens besteht darin, daß der Zyklon ein Unterteil aufweist, mit jeweils tangential angeordneten Zufuhr- und Abfuhrstutzen für die Flüssigkeit und einer diesen Stutzen gegenüberliegenden, als Abschnitt eines Kreiszylinders ausgebildeten Wand mit größerem Radius als der Radius des daran nach oben hin anschließenden Mittelteils bzw. Oberteils beträgt.

Ein anderer erfindungsgemäß ausgebildeter Zyklon weist ein in zwei Teile unterteiltes Unterteil auf, wobei der obere Teil mit seiner Außenwandung als eine Einlaufspirale für die im Bypass für Primär-Flotationsanordnung geführte, rezirkulierte Suspensionsmenge dient, und der untere Teil den Auslaß für die entgaste Suspensionsmenge aufweist.

Im folgenden wird die Erfindung anhand zweier in den Figuren der Zeichnung dargestellter Ausführungsbeispiele erläutert.

Dabei stellt
- Fig. 1a: eine Ansicht,
- Fig. 1b: eine Draufsicht und
- Fig. 1c: einen Querschnitt entsprechend einer Seitenansicht zu Fig. 1a im dargestellten Rißschema und
- Fig. 2a: einen Querschnitt und
- Fig. 2b: eine Draufsicht einer anderen Ausführungsform dar.

Dabei ist die erfindungsgemäße Apparatur mit 10 im Schaltungsschema aufgeführt. Der Flüssigkeitseintrittsstutzen der Apparatur 10 ist mit 5 und der Abzugsstutzen mit 6 bezeichnet. Sie sind parallel angeordnet und befinden sich an derselben Seite des Unterteils 1, und zwar an dessen Kanten, so daß sowohl die Zufuhr als auch die Abfuhr der Flüssigkeit tangential erfolgt. Nach oben hin schließt sich an das Unterteil 1 das konzentrische Mittelteil 2 an, dessen Radius mindestens etwa 20 % kleiner als der des abgerundeten Wandteils des Unterteils 1 beträgt, das Zufuhr- und Abzugsstutzen gegenüberliegt. Die Höhe des zylindrischen Teils 2 ist mindestens so groß wie sein Durchmesser beträgt. Der Eintrittsbereich im oberen Teil des Mittelteils 2 für die verschäumte Flüssigkeit wird durch ein topfartiges Teil 3 gebildet, das zu der Oberkante des Mittelteils 2 einen ringförmigen Eintrittsquerschnitt 17 bildet. Durch das Topfteil 3 und in den oberen Bereich des Mittelteils 2 ragt das Gasabzugsrohr 4 zentral hinein. Es wird nach oben vorzugsweise über die Überlaufkante 8 des strichliert dargestellten Schaumabzugswehres 24 hinausgeführt und endet aber noch vorzugsweise innerhalb der ebenfalls strichpunktiert dargestellten Schaumrinne 22. Die eine Begrenzungswand dieser Schaumrinne ist die Seitenwand 20 der Flotationszellenanordnung 20 der Primärstufe (ebenfalls strichpunktiert dargestellt). Vorzugsweise ist der Durchmesser des Gasabzugsrohres 4 mindestens 60 % kleiner als der Durchmesser des Mittelteils 2.

Ferner ragt vorzugsweise das Mittelteil 2 ein kleines Stück (etwa 20 % der Höhe des Unterteils 1) in das Unterteil 1 hinein.

Das Durchmesserverhältnis des mittleren Teils 2 zu dem den runden Wänden des Unterteils 1 entsprechenden Zylinder beträgt vorzugsweise zwischen 0,6 und 08.

Die in den Eintrittsstutzen 5 eingeleitete Rezirkulations-Flüssigkeitsmenge erzeugt in dem Unterteil 1 eine Rotationsströmung, in Form im wesentlichen eines Potentialwirbels, der sich auch in das Mittelteil 2 hinein fortpflanzt und somit auch die verschäumte Flüssigkeitsmenge der Schaumabzugsrinne 22 erfaßt, wodurch sich das darin enthaltene Gas (Luft) zentral sammelt und über das Gasabzugsrohr 4 abgeführt werden kann.

Wichtig für das Funktionieren des Verfahrens und der Apparatur ist geringer Druckverlust der letzteren, da nur eine geringe Niveau-Differenz zwischen Boden der Schaumrinne 22 und Einlaufstutzen der Pumpe 35 besteht. Diese Bedingung ist aber, wie Versuche ergeben haben, bei dieser Apparatur sehr gut erfüllt. Vorzugsweise wird der Querschnitt des Abzugsstutzens 6 etwas größer gewählt als derjenige des Zufuhrstutzens 5, da ja eine größere Menge abgeführt werden muß als zugeführt wird.

Vorzugsweise ist die durch die Apparatur 10 zuleitende Rezirkulationsmenge 60 - 85 % der Gesamt-Rezirkulationsmenge, so daß durch Leitung 43 nur der kleinere Rest dem Eingangsteil 21 der Primär-Flotationszellenanordnung zugeführt wird, wobei ein Abgang von ca. 3 % durch Flotationsschlamm anzusetzen ist.

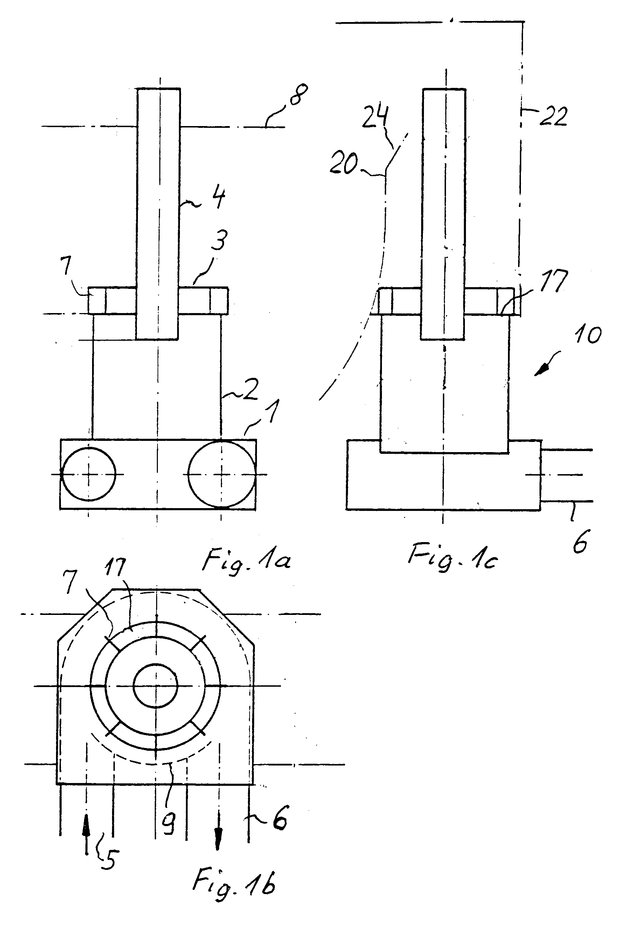

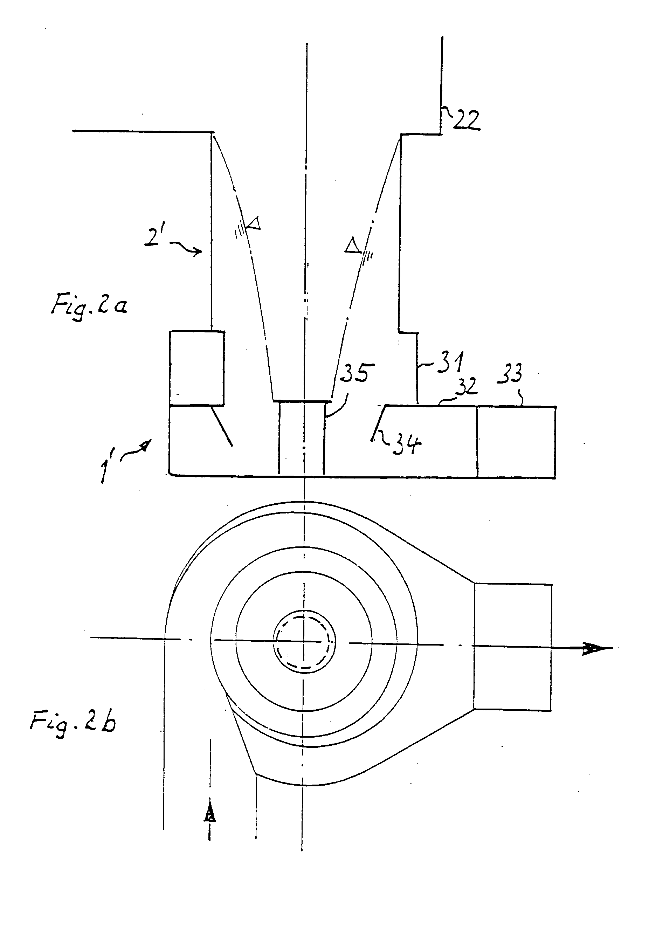

In Figur 2a und 2b ist eine andere Ausführungsform der Entgasungseinrichtung dargestellt, bei der das Mittelteil der Figuren 1a bis 1c das Oberteil 2' der Einrichtung ist. Dafür ist das Unterteil 1' in zwei übereinanderliegende Teile zergliedert. Die Figuren dieser Einrichtung weisen für die im wesentlichen gleichen Teile wie in Figur 1a bis 1c die entsprechenden Bezugszeichen, aber mit Beistrich versehen, auf.

Der obere Teil 31 des Unterteils 1' ist dabei als Einlaufspirale für die im Bypass zur Primär-Flotationsanordnung geführte, rezirkulierte Suspensionsmenge ausgebildet, wie man aus Figur 3b erkennt. Der Eintrittsbereich des Unterteils 32 weist einen sich nach unten verjüngenden Einlauftrichter 34 auf, wobei die Neigung seiner Erzeugenden in die Vertikale zwischen 10 und 20^{o} beträgt. Zentral weist das Unterteil 32 einen Leitzylinder 35 auf, dessen durchmesser zwischen dem 0,2- bis 0,3-fachen des Durchmessers der Einlauföffnung des Trichterteils 34 beträgt. Der Einlaufzylinder reicht bis in den Bereich der Einlauföffnung des Unterteils 32. Das Unterteil 32 weist einen radialen Auslaufkanal 33 auf, durch welchen die entgaste Suspension einer Förderpumpe zuströmt. Die Höhenverhältnisse zwischen dem oberen Teil (Einlaufspirale) 31 und dem unteren Teil 32 des Unterteils 1' liegen zwischen 0,8:1 und 1,2:1.

Das Verhältnis zwischen der Höhe des Mittelteils 2 bzw. Oberteils 2' und dessen Durchmesser beträgt mindestens etwa 0,8:1.

## Patentansprüche

1. Verfahren zur Entschäumung und Entgasung von Flüssigkeiten in einem im wesentlichen rotationssymmetrisch ausgebildeten Zyklon durch tangentiale Einleitung einer Strömung eines Fluidums, dadurch gekennzeichnet, daß zur Entschäumung und Entgasung der von der Schaumrinne einer Primär-Flotationszellenanordnung zur nachgeschalteten Sekundär-Flotationszellenanordnung strömenden Flüssigkeitsmenge eine Rückführmenge der gereinigten Flüssigkeit der Sekundärstufe in den Unterteil (1) eines Zyklons zugeführt wird, daß mit dieser zurückgeführten Flüssigkeitsmenge eine vom Unterteil (1) ausgehende in ein Mittel- (2) bzw. Oberteil (2') reichende Rotationsströmung (Potentialwirbel) der in der Apparatur eingeschlossenen Flüssigkeitsmenge erzeugt wird, daß die entgaste Flüssigkeit vom Unterteil (1) abgeführt wird und die zuzuführende, zu entschäumende und entlüftende Flüssigkeitsmenge im oberen Randbereich der Wirbelströmung zugeführt wird, und daß aus dem Wirbelkern des Potentialwirbels und/oder aus dem konzentrisch darum herum befindlichen Bereich das abgetrennte Gas (Luft) nach oben abgeführt wird.

2. Verfahren nach Anspruch 1, dadurch gekennzeichnet, daß die zu entschäumende und zu entgasende Flüssigkeit der Rotationsströmung vom Boden der Schaumrinne (22) zugeführt wird.

3. Zyklon zur Durchführung des Verfahrens nach Anspruch 1 oder 2 zur Entschäumung und Entgasung der von der Schaumrinne einer Primär-Flotationszellenanordnung zur nachgeschalteten Sekundär-Flotationszellenanordnung strömenden Flüssigkeitsmenge, dadurch gekennzeichnet, daß der Zyklon ein Oberteil (3) zur Zuführung der zu entgasenden Flüssigkeits-/Schaum-Schaummenge aufweist, ein Mittelteil, in den hinein der Potentialwirbel ausbildbar ist, und ein mit tangentialem Zufuhrstutzen (5) für die rückgeführte Flüssigkeitsmenge der Sekundärflotationsstufe und tangentialen Abfuhrstutzen (6) für die entgaste Flüssigkeit versehenes Unterteil (1), in dem eine Rotationsströmung ausbildbar ist, mit einer diesen beiden Stutzen (5, 6) gegenüberliegenden kreiszylinderabschnittförmig gebogenen Wand mit größerem Radius als der Radius des daran nach oben hin anschließenden Mittelteils (2).

4. Zyklon zur Durchführung des Verfahrens nach Anspruch 1 oder 2 zur Entschäumung und Entgasung der von der Schaumrinne einer Primär-Flotationszellenanordnung zur nachgeschalteten Sekundär-Flotationszellenanordnung strömenden Flüssigkeitsmenge, dadurch gekennzeichnet, daß ein Oberteil (2') über dessen Oberkante die zu entgasende Flüssigkeits-/Schaummenge zuführbar ist und in den hinein der Potentialwirbel ausbildbar ist und ein Unterteil (1') vorgesehen ist, daß das Unterteil (1') in zwei übereinanderliegende Teile (31, 32) unterteilt ist, wobei der obere Teil (31) mit seiner Außenwandung als eine Einlaufspirale für die im Bypass geführte, rezirkulierte Suspensionsmenge ausgebildet ist und der untere Teil (32) den Auslaß (33) für die entgaste Suspensionsmenge aufweist, und daß die Radien des Unterteils (1') größer sind als der Radius des Oberteils (2').

5. Zyklon nach Anspruch 3 oder 4, gekennzeichnet durch ein den oberen Teil des Mittelteils (2) bzw. Oberteils (2') durchsetzendes, zentrales Gasabzugsrohr (4).

6. Zyklon nach Anspruch 3 oder 5, gekennzeichnet durch einen an das Mittelteil (2) anschließenden topfförmigen, unten offenen und mit seitlichen Zulauföffnungen versehener Deckelteil (3), der mit der Oberkante des Mittelteils (2) einen im wesentlichen ringförmigen Zuflußquerschnitt (17) zum Mittelteil (2) für den Schaum bildet.

7. Zyklon nach einem der Ansprüche 3, 5 oder 6, gekennzeichnet durch eine sich zwischen der Mittelachse von Zufuhr- (5) und Abzugsstutzen (6) erstreckende, kreiszylinderabschnittförmige Leitwand (9) des Unterteils (1).

8. Zyklon nach einem der Ansprüche 3 oder 5 bis 7, gekennzeichnet durch radiale Rippen (7), die von dem Außenrand des topfförmigen Oberteils (3) ausgehen und das Oberteil (3) einschließlich des zentralen Gasabzugsrohres (4) am Boden der Schaumrinne (22) oder am Mittelteil (2) festlegen.

9. Zyklon nach einem der Ansprüche 3 oder 5 bis 8, dadurch gekennzeichnet, daß die Differenz der Radien vom Mittelteil (2) und kreiszylinderförmiger Leitwand (9) des Unterteils (1) mindestens 20 % des Radius des Mittelteils (2) beträgt.

10. Zyklon nach Anspruch 4, dadurch gekennzeichnet, daß der Eingangsbereich des unteren Teils (32) des Unterteils in Form eines sich nach unten hin verjüngenden Trichters ausgebildet ist, dessen Erzeugende einen Neigungswinkel gegenüber der Vertikalen zwischen 10 und 20^{o} aufweist.

11. Zyklon nach Anspruch 4 oder 10, gekennzeichnet durch einen zentralen Leitzylinder (35) im unteren Teil (32) des Unterteils (1'), der im wesentlichen bis in den Bereich der Einlaßöffnung desselben reicht und einen Durchmesser zwischen dem 0,2- und 0,3-fachen des Durchmessers der Eintrittsöffnung des unteren Teils (32) des Unterteils (1') aufweist.

12. Zyklon nach einem der Ansprüche 3 bis 11, dadurch gekennzeichnet, daß die Höhe des Mittelteils (2) bzw. Oberteils (2') mindestens 0,8 mal dessen Durchmesser beträgt.

## Claims

1. A process for the defoaming and deaeration of fluids in a cyclone designed to be essentially rotation-symmetric, by tangential introduction of a flow of a fluid, characterized in that for defoaming and deaeration of the fluid quantity flowing from the foam pan of a primary flotation cell arrangement to the downstream secondary flotation cell arrangement a return quantity of the cleaned fluid of the secondary stage is fed to the lower section (1) of a cyclone, that with this returned fluid quantity a rotational flow (potential vortex) of the fluid quantity enclosed in the apparatus is generated departing from the lower section (1) into a central section (2) or upper section (2'), that the deaerated fluid is discharged from the lower section (1) and the fluid quantity to be fed in, to be defoamed and deaerated is fed in the upper edge area of the vortex flow, and that out of the vortex core of the potential vortex and/or out of the area located concentrically around it, the separated gas (air) is discharged upwards.

2. A process according to claim 1, characterized in that the fluid of the rotational flow to be defoamed and degassed is fed from the bottom of the foam pan (22).

3. Cyclone for carrying out the process according to claim 1 or 2 for the defoaming and deaeration of the fluid quantity flowing from the foam pan of a primary flotation cell arrangement to the downstream secondary flotation cell arrangement, characterized in that the cyclone has an upper section (3) for the feeding of the fluid/foam quantity to be deaerated, a central section into which the potential vortex can be formed, and a lower section (1) provided with tangential supply branch (5) for the returned fluid quantity of the secondary flotation stage and tangential discharge branch (6) for the deaerated fluid, in which a rotational flow can be formed, with a wall curved like a circular cylinder section opposite these two branches (5, 6) with a larger radius than the radius of the central section (2) connecting to this upwards.

4. A cyclone for carrying out the process according to claim 1 or 2 for the defoaming and deaeration of the fluid quantity flowing from the foam pan of a primary flotation cell arrangement to the downstream secondary flotation cell arrangement, characterized in that an upper section (2') over whose upper edge the fluid/foam quantity to be deaerated can be fed and into which the potential vortex can be formed and a lower section (1') is provided, that the lower section (1') is divided into two parts one above the other (31, 32), with the upper section (31) being designed as an inlet spiral for the suspension quantity recirculated in the bypass and the lower section (32) having the outlet (33) for the deaerated suspension quantity, and that the radii of the lower section (1') are larger than the radius of the upper section (2').

5. Cyclone according to claim 3 or 4, characterized by a central gas discharge pipe (4) passing through the upper section of the central section (2) or the upper section (2').

6. A cyclone according to claim 3 or 5, characterized by a pot-shaped cover part (3) open at the bottom and provided with lateral supply openings, connecting to the central section (2), with this cover part forming with the top edge of the central section (2) an essentially annular inlet cross-section (17) to the central section (2) for the foam.

7. A cyclone according to one of claims 3, 5 or 6, characterized by a guide wall (9) of the lower section (1) shaped in the form of a circular cylinder section extending between the central axis of supply (5) and discharge branch (6).

8. A cyclone according to one of claims 3 or 5 to 7, characterized by radial ribs (7), which depart from the outer edge of the pot-shaped upper section (3) and determine the upper section (3), including the central gas discharge pipe (4) at the bottom of the foam pan (22) or at the central section (2).

9. Cyclone according to one of claims 3 or 5 to 8, characterized in that the difference of the radii from the central section (2) and the circular cylinder-shaped guide wall (9) of the lower section (1) is at least 20 % of the radius of the central section (2).

10. A cyclone according to claim 4, characterized in that the inlet area of the lower section (32) of the lower section in the form of a funnel tapered downwards, whose generatrix has an angle of inclination between 10 and 20° with respect to the vertical.

11. Cyclone according to claim 4 or 10, characterized by a central guide cylinder (35) in the lower section (32) of the bottom section (1'), which extends essentially up to the area of the inlet opening of the same and has a diameter between 0.2 and 0.3 times the diameter of the inlet opening of the lower section (32) of the bottom section (1').

12. A cyclone according to one of claims 3 to 11, characterized in that the height of the central section (2) or upper section (2') is at least 0.8 times its diameter.

## Revendications

1. Procédé de suppression de mousse et de dégazage de liquides, mis en oeuvre dans un cyclone de configuration sensiblement symétrique de révolution, opérant par introduction tangentielle d'un courant de fluide, caractérisé en ce que, pour la suppression de mousse et le dégazage du débit de liquide qui s'écoule de la rigole à mousse dans un ensemble cellule de flottation primaire à l'ensemble cellule de flottation secondaire placé en aval, un débit renvoyé en sens inverse du liquide épuré de l'étage secondaire est acheminé à la partie inférieure (1) d'un cyclone, en ce qu'avec ce débit de liquide renvoyé en sens inverse, on engendre un courant rotatif (tourbillon potentiel) de la quantité de liquide enfermée dans l'appareil, qui part de la partie inférieure (1) et parvient dans une partie médiane (2) ou une partie supérieure (2'), en ce que le liquide dégazé est évacué de la partie inférieure (1) et le débit de liquide à acheminer, dont il s'agit de supprimer la mousse et qu'il faut désaérer, est acheminé dans la région marginale supérieure du courant tourbillonnaire, et en ce que le gaz séparé (l'air) est évacué de bas en haut, à partir du coeur du tourbillon potentiel et/ou de la région qui se trouve concentriquement autour de ce coeur.

2. Procédé selon la revendication 1, caractérisé en ce que le liquide dont il s'agit de supprimer la mousse et qu'il faut dégazer est amené au courant en rotation en provenance du fond de la rigole à mousse (22).

3. Cyclone pour la mise en oeuvre du procédé selon la revendication 1 ou 2, pour la suppression de la mousse et le dégazage du débit de liquide qui s'écoule de la rigole à mousse d'un ensemble cellule de flottation primaire à l'ensemble cellule de flottation secondaire placé en aval, caractérisé en ce que le cyclone comprend une partie supérieure (3) servant à l'acheminement du débit de liquide/mousse à dégazer, une partie médiane, dans laquelle le tourbillon potentiel peut être formé, et une partie inférieure (1), prévue pour le liquide dégazé, et munie d'une tubulure d'arrivée tangentielle (5) du débit de liquide de l'étage de flottation secondaire renvoyé en sens inverse, et d'une tubulure de départ tangentielle (6) du liquide dégazé, partie inférieure dans laquelle peut se former un courant rotatif, comprenant une paroi incurvée, en forme de segment de cylindre à base circulaire, qui fait face à ces deux tubulures (5, 6) et qui possède un rayon supérieur au rayon de la partie médiane (2) qui y fait suite vers le haut.

4. Cyclone pour la mise en oeuvre du procédé selon la revendication 1 ou 2 pour la suppression de la mousse et le dégazage du débit de liquide qui s'écoule de la rigole à mousse d'un ensemble cellule de flottation primaire à l'ensemble cellule de flottation secondaire placé en aval, caractérisé en ce qu'il y est prévu une partie supérieure (2') par dessus du bord supérieur de laquelle le débit de liquide/mousse à dégazer peut être acheminé, et dans laquelle peut se former le tourbillon potentiel, et une partie inférieure (1'), en ce que la partie inférieure (1') est subdivisée en deux portions superposées (31, 32), la portion supérieure (31) formant, par sa paroi extérieure, une spirale d'entrée du débit de suspension recyclé, qui passe en dérivation, et la portion inférieure (32) présentant la sortie (33) du débit de suspension dégazé, et en ce que les rayons de la partie inférieure (1') sont plus grands que le rayon de la partie supérieure (2').

5. Cyclone selon la revendication 3 ou 4, caractérisé par un tube (4) d'extraction du gaz, central, qui traverse la portion supérieure de la partie médiane (2) ou de la partie supérieure (2').

6. Cyclone selon la revendication 3 ou 5, caractérisé par une partie couvercle (3), en forme de cloche, qui fait suite à la partie médiane (2), qui est ouverte vers le bas et munie d'ouvertures d'arrivée latérales, et qui forme, avec le bord supérieur de la partie médiane (2) une section (17) d'arrivée de la mousse, sensiblement annulaire, qui donne dans la partie médiane (2).

7. Cyclone selon une des revendications 3, 5 et 6, caractérisé par une paroi déflectrice (9) de la partie inférieure (2), en forme de segment de cylindre à base circulaire, qui s'étend entre l'axe médian de la tubulure d'arrivée (5) et la tubulure d'extraction (6).

8. Cyclone selon une des revendications 3 ou 5 à 7, caractérisé par des nervures radiales (7) qui partent du bord extérieur de la partie supérieure (3) en forme de cloche, et fixent la partie supérieure (3), y compris le tube central (4) d'extraction du gaz, au fond de la rigole à mousse (22) ou à la partie médiane (2).

9. Cyclone selon une des revendications 3 ou 5 à 8, caractérisé en ce que la différence des rayons de la partie médiane (2) et de la paroi déflectrice (9), en forme de cylindre à base circulaire, de la partie inférieure (1) est d'au moins 20 % du rayon de la partie médiane (2).

10. Cyclone selon la revendication 4, caractérisé, en ce que la région d'entrée de la portion inférieure (32) de la partie inférieure présente la forme d'un entonnoir qui se rétrécit vers le bas, dont la génératrice a un angle d'inclinaison compris entre 10° et 20° par rapport à la verticale.

11. Cyclone selon la revendication 4 ou 10, caractérisé par un cylindre déflecteur central (35) disposé dans la portion inférieure (32) de la partie inférieure (1'), qui s'étend sensiblement jusque dans la région de l'ouverture d'admission de cette partie, et possède un diamètre compris entre 0,2 et 0,3 fois le diamètre de l'ouverture d'entrée de la portion inférieure (32) de la partie inférieure (1').

12. Cyclone selon une des revendications 3 à 11, caractérisé en ce que la hauteur de la partie médiane (2) ou de la partie supérieure (2') est égale à au moins 0,8 fois son diamètre.
